Europäisches Patentamt

European Patent Office

Office européen des brevets

(19)

(11) Numéro de publication: **0 330 526**
**A1**

## DEMANDE DE BREVET EUROPEEN

(21) Numéro de dépôt: **89400147.8**

(22) Date de dépôt: **18.01.89**

(51) Int. Cl.⁴: **G 01 B 5/28**
**G 01 B 7/34**

(30) Priorité: **22.01.88 FR 8800708**

(43) Date de publication de la demande:
**30.08.89 Bulletin 89/35**

(84) Etats contractants désignés:
**AT BE CH DE ES FR GB GR IT LI LU NL SE**

(71) Demandeur: **ASSOCIATION POUR LA RECHERCHE ET LE DEVELOPPEMENT DES METHODES ET PROCESSUS INDUSTRIELS (ARMINES)**
**60, Boulevard Saint-Michel**
**F-75272 Paris Cédex 06 (FR)**

(72) Inventeur: **Gilibert, Yvon**
**11 Rue Eugène Delacroix La Neuvillette**
**F-51100 Reims (FR)**

(74) Mandataire: **Bruder, Michel**
**Cabinet Michel Bruder Conseil en Brevets 10, rue de la Pépinière**
**F-75008 Paris (FR)**

(54) Procédé et appareil de mesure de la rugosité d'une surface d'une pièce.

(57) Pour mesurer la rugosité d'une surface d'une pièce dans lequel on applique, sur la surface rugueuse (1a) de la pièce (1), une première surface (3a) d'un élément plan déformable (3) et on exerce, sur une second surface (3b) de l'élément plan déformable (3), parallèle et opposée à la première surface (3a), une pression constante (Pc), en direction de la pièce (1).

Pour effecteur cette mesure rapidement et d'une manière précise et fiable l'élément déformable est réalisé en un matériau ayant un grand degré de déformabilité élatique réversible et il porte sur sa seconde surface (3b), c'est-à-dire celle qui est opposée à la première surface (3a) appliquée sur la surface rugueuse (1a), au moins une jauge de déformation (4) reliée à un appareil de mesure.

Fig. 1

EP 0 330 526 A1

Bundesdruckerei Berlin

**Description**

La présente invention concerne un procédé et un appareil de mesure de la rugosité d'une surface d'une pièce.

Dans de nombreux domaines industriels la détermination de l'état de surface ou de la rugosité d'une pièce, notamment métallique, est de la plus haute importance. En effet la rugosité conditionne un nombre important de fonctions, notamment les conditions de frottement entre deux pièces, leur adhérence, leur énergie de surface, l'adhérence d'une couche de colle intermédiaire servant à l'assemblage de deux pièces etc. Il est donc nécessaire, dans ces applications industrielles, de déterminer avec précision la rugosité de la surface des pièces concernées. Cette détermination a été jusqu'à présent effectuée au moyen d'appareils dits "rugosimètres", qui sont généralement d'une structure particulièrement complexe et délicats à mettre en oeuvre ou des méthodes optiques ou interférométriques etc...

On connaît par ailleurs, ainsi qu'il est décrit dans le brevet FR-A-1 583 511 un dispositif pour l'enregistrement de l'état de surface d'une pièce qui est constitué d'un film composite comportant une couche mince de matériau souple de synthèse, susceptible de subir des déformations plastiques temporaires, superposée à une couche mince de matériau malléable susceptible de subir des déformations plastiques permanentes, avec interposition entre ces deux matériaux d'un produit de liaison tel qu'un adhésif. Ce film composite, une fois appliqué sous pression contre une surface dont la rugosité doit être caractérisée, permet de relever ensuite instantanément, sur le matériau malléable, une empreinte tridimensionnelle de cette surface rugueuse. Un tel dispositif, s'il permet de relever aisément l'état des surface d'une pièce, ne se prête absolument pas à une interprétation automatique et instantanée de la déformation de la couche de matériau malléable caractérisant la rugosité de la surface.

La présente invention vise à remédier à ces inconvénients en procurant un procédé et un appareil de conception très simple permettant d'obtenir très rapidement des mesures précises et fiables de la rugosité.

A cet effet ce procédé de mesure de la rugosité d'une surface d'une pièce dans lequel on applique, sur la surface rugueuse de la pièce, une première surface d'un élément plan déformable et on exerce, sur une seconde surface de l'élément plan déformable, parallèle et opposée à la première surface, une pression constante, en direction de la pièce, de manière que la première surface de l'élément déformable épouse étroitement le profil de la surface rugueuse en pénétrant entre les aspérités de cette surface rugueuse, est caractérisé en ce que l'élément plan déformable est réalisé en un matériau ayant un grand degré de déformabilité élastique réversible de manière que la première surface de l'élément pénètre élastiquement et réversiblement entre les aspérités de la surface rugueuse et on mesure in situ, c'est-à-dire pendant que l'élément plan déformable est pressé contre la surface rugueuse, la déformation (contraction ou dilatation de Poisson) ou le déplacement résultant de la seconde surface de l'élément déformable.

Suivant une caractéristique complémentaire de l'invention on peut exercer en outre sur l'élément déformable, pendant la mesure, un effort d'intensité variable, parallèlement au plan de la surface rugueuse.

L'invention a également pour objet un appareil de mesure de la rugosité d'une surface d'une pièce comprenant un capteur volumique de rugosité constitué par un élément déformable d'épaisseur constante, ayant deux surfaces principales à savoir une première surface destinée à être appliquée sur la surface rugueuse dont la rugosité doit être mesurée, et une seconde surface et des moyens pour appliquer sous pression l'élément déformable sur la surface rugueuse, caractérisé en ce que l'élément déformable est réalisé en un matériau ayant un grand degré de déformalité élastique réversible et il porte sur sa seconde surface, c'est-à-dire celle qui est opposée à la première surface appliquée sur la surface rugueuse, au moins une jauge de déformation reliée à un appareil de mesure.

Le procédé et l'appareil suivant l'invention permettent d'obtenir, par une simple mesure d'extensométrie, une indication de la rugosité de la surface de la pièce à partir du signal de mesure fourni par la jauge de déformation.

L'appareil suivant l'invention constitue un capteur volumique ou tridimensionnel de rugosité qui est intégralement récupérable après chaque mesure de rugosité.

On décrira ci-après, à titre d'exemples non limitatifs, diverses formes d'exécution de la présente invention, en référence au dessin annexé sur lequel :

La figure 1 est une vue en couple d'une pièce à surface rugueuse dont la rugosité doit être mesurée et d'un appareil de mesure suivant l'invention, la pièce et l'appareil étant écartés l'un de l'autre.

La figure 2 est une vue en coupe semblable à celle de la figure 1 pendant une opération de mesure de la rugosité.

La figure 3 est une vue en coupe illustrant la répartition des déformations dans l'épaisseur de l'élément déformable pendant une mesure de rugosité.

La figure 4 est une vue en coupe d'une forme d'exécution d'un capteur volumique de rugosité suivant l'invention.

La figure 5 est une vue en coupe d'une variante d'exécution d'un capteur volumique de rugosité suivant l'invention.

La figure 6 est un diagramme illustrant la variation de la déformation superficielle mesurée en fonction de la rugosité de la surface de la pièce.

La surface 7 est une vue en coupe illustrant une variante de mise en oeuvre du procédé de mesure suivant l'invention.

La figure 8 est un diagramme illustrant la variation de la déformation superficielle au "démarrage" en fonction de la rugosité de la surface de la pièce.

Les figures 9 à 18 sont des vues en coupe schématiques illustrant diverses applications du capteur de rugosité suivant l'invention.

La figure 19 est une vue en coupe d'une forme d'exécution pratique d'un appareil de mesure de rugosité suivant l'invention.

La figure 20 est une vue en coupe d'une variante d'exécution de l'appareil de mesure représenté sur la figure 19.

La figure 21 est une vue en coupe horizontale faite suivant la ligne XXI-XXI de la figure 20.

La figure 22 est une vue en coupe d'une autre variante d'exécution de l'appareil de mesure représenté sur la figure 19.

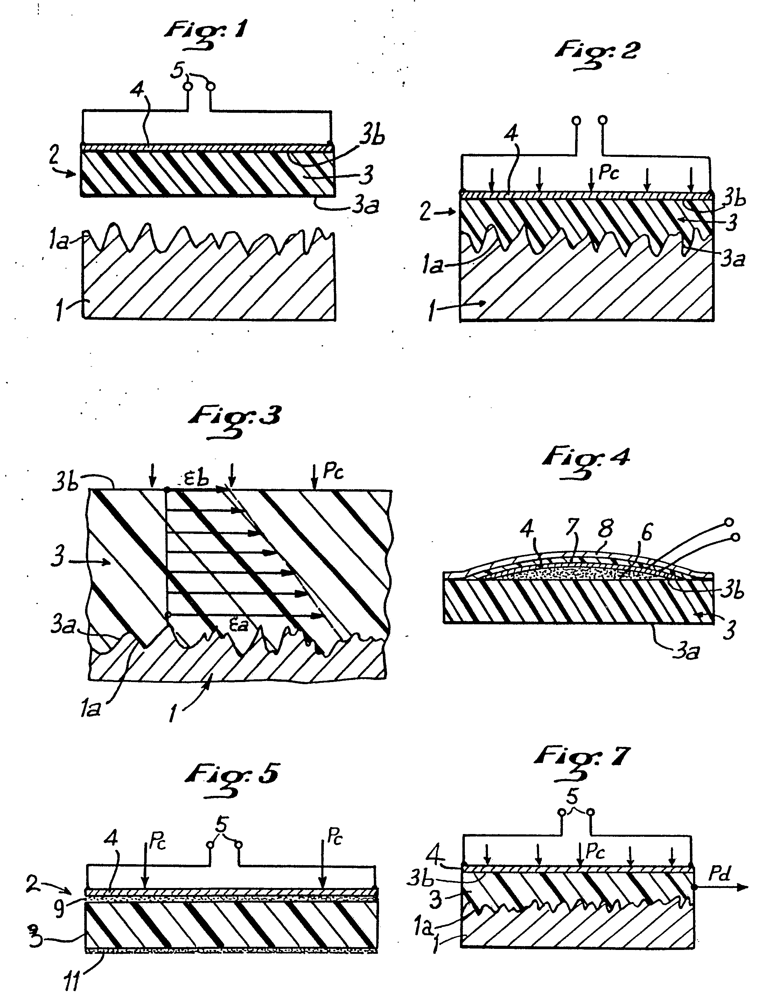

Sur les figures 1 et 2 est représentées une pièce 1, par exemple métallique, qui présente une surface rugueuse 1a dont la rugosité doit être mesurée. Cette rugosité est constituée par des aspérités microscopiques résultant de l'élaboration de la surface 1a qui doit assumer une fonction définie, et la forme géométrique de ces aspérités, c'est-à-dire le pas entre les "pointes" et la profondeur des creux entre les "pointes", varie avec les moyens d'élaboration, les paramètres d'application d'une élaboration donnée et la nature des substrats traités. Pour mesurer la rugosité de la surface 1a de la pièce 1, on utilise, suivant l'invention, un capteur volumique de rugosité désigné dans son ensemble par la référence 2 sur les figures 1 et 2. Ce capteur est constitué essentiellement par un élément déformable 3 en un matériau ayant un certain degré de flexibilité c'est-à-dire une grande déformabilité élastique réversible, par exemple en caoutchouc du type "ZODIAC" ou "HUTCHINSON", cet élément déformable 3 ayant une épaisseur constante de 0,4mm par exemple. L'élément déformable 3 présente une première surface plane 3a, lisse ou légèrement rugueuse, destinée à être appliquée contre la surface rugueuse 1a de la pièce 1. L'élément déformable 3 porte, sur sa seconde surface plane 3b, parallèle et opposée à la première surface 3a, une jauge d'extensométrie 4 dont les deux extrémités sont reliées à des bornes 5 pouvant être connectées à un appareil de mesure.

Pour mesurer la rugosité de la surface 1a de la pièce 1 on applique, sur cette surface, le capteur volumique de rugosité 2, sous une pression constante prédéterminée Pc, qui est appliquée sur la seconde surface 3b de l'élément déformable 3 et qui est transmise à la première surface 3a à travers le matériau de l'élément 3. Il en résulte, ainsi qu'il est représenté sur les figures 2 et 3, que la première surface 3a se déforme, sous l'effet de la pression Pc, en épousant le profil de la surface rugueuse 1a, le matériau de l'élément déformable 3 pénétrant élastiquement et réversiblement dans les creux définis entre les aspérités de la surface rugueuse 1a. La pénétration de l'élément déformable 3, dans les aspérités du rugosité, sous l'effet de la pression Pc, provoque un allongement moyen dans la direction perpendiculaire à la surface rugueuse 1a et une contraction a dans le plan moyen rugueux due à l'effet Poisson. La déformation de compression a du matériau de l'élément 3, qui se produit dans le plan de la surface de contact déformée 3a, par suite de la pénétration du matériau dans les creux de la surface rugueuse 1a, se transmet, en se réduisant progressivement, à travers l'épaisseur de l'élément 3 et elle se traduit par une déformation de compression moindre b, dans le plan de la seconde surface 3b de l'élément 3, comme il est illustré schématiquement sur la figure 3. Cette déformation de compression superficielle b est mesurée par la jauge d'extensométrie 4 et elle caractérise la rugosité de la surface 1a.

Du fait du comportement élastique et réversible du matériau constituant l'élément déformable 3, l'ensemble de son volume et notamment de la surface rugueuse 3a conservent leur intégrité, c'est-à-dire qu'il reprend sa forme naturelle au repos après chaque opération de mesure de rugosité. La déformation superficielle b, dans le plan de la seconde surface 3b, dépend ainsi de la rugosité de la surface 1a, pour une même pression constante Pc et il est donc possible de mesurer la rugosité de n'importe quelle surface 1a d'une pièce 1 à partir de la mesure de la déformation superficielle b fournie par la jauge d'extensométrie 4. Il suffit d'étalonner le capteur volumique de rugosité 2 à partir d'étalons de rugosité existants.

Pour la production de la pression Pc appliquée à l'élément déformable 3, on peut utiliser divers moyens tels que des dispositifs pneumatiques, mécaniques, électromagnétiques etc.. On peut notamment utiliser un piston logé dans un corps et délimitant avec ce corps, d'un côté, une chambre dans laquelle on introduit un fluide à pression variable tel que l'air ou un gaz quelconque, de manière à appliquer l'autre côté du piston, avec une pression variable, sur le capteur de rugosité lui-même plaqué contre la pièce 1. Suivent une variante le piston peut être supprimé et on peut appliquer directement la pression Pc d'un fluide quelconque à la seconde surface 3b de l'élément déformable 3. Ceci permet l'adaptation de cet élément 3 à des pièces 1 ayant des surface rugueuses 1a de formes quelconques voisines du plan. On peut également utiliser, pour créer la pression Pc, un électroaimant à champ variable dont l'armature mobile est plaquée contre le capteur de rugosité.

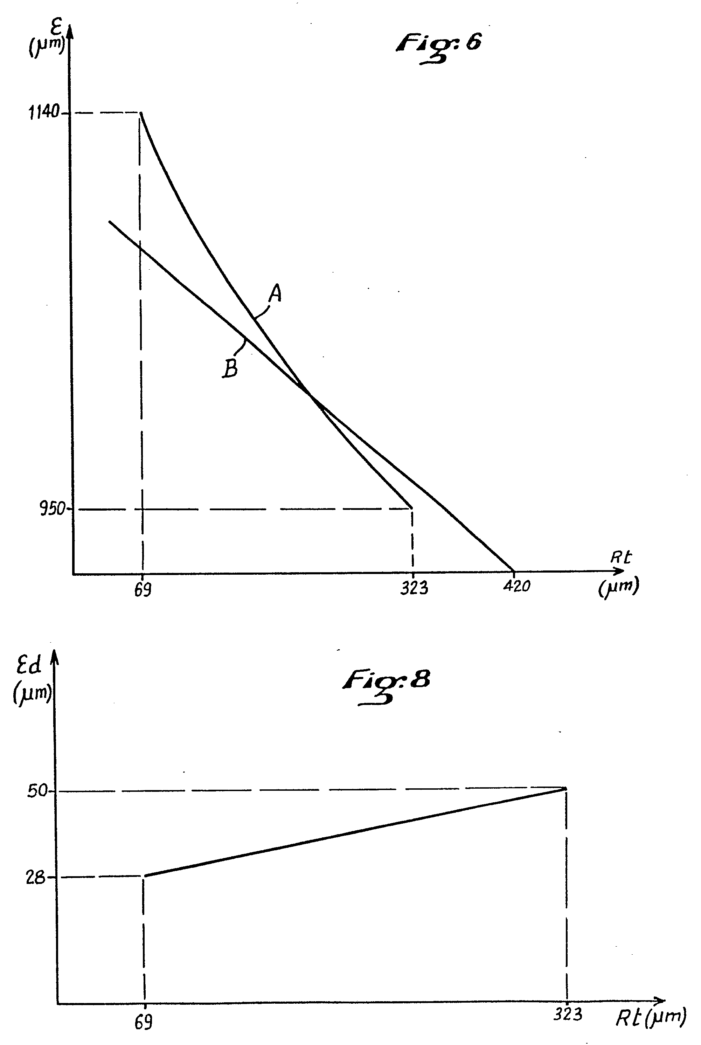

Dans la forme d'exécution de l'invention représentée sur la figure 4 la jauge d'extensométrie 4, qui peut être par exemple une jauge du type HBM (k = 2,11), est collée sur la seconde surface 3b de l'élément déformable 3, au moyen d'une couche de colle 6 (par exemple une colle Z80 HBM). Par dessus la jauge d'extensométrie 4 s'étend une couche de résine de protection 7 et par dessus cette couche est disposé un morceau de ruban adhésif 8.

Dans la variante d'exécution de l'invention représentée sur la figure 5 le capteur volumique de rugosité comprend une jauge d'extensométrie 4 qui est fixée à la second surface 3b de l'élément déformable 3 au moyen d'un adhésif auto-collant biface 9. Un autre adhésif auto-collant 11 est appliqué sur la première surface 3a, pour assurer la liaison de l'élément déformable 3 avec la pièce 1 dont la rugosité de la surface doit être mesurée. Lorsque le capteur 2, tel que représenté sur la figure 5, adhère à la pièce 1 à surace rugueuse 1a, l'adhérence dépend de la rugosité de la surface 1a et de la nature de la couche superficielle précontrainte dans laquelle est formée la surface rugueuse 1a, c'est-à-dire en fait de la maille de répartition des atomes dans cette couche et de l'énergie libre de surface.

On peut naturellement envisager d'utiliser d'autres moyens pour maintenir le capteur de rugosité 2 sur la surface rugueuse 1a de la pièce 1. Notamment si cette pièce est métallique, on peut employer à cet effet un aimant appliqué sur le capteur 2 et attiré magnétiquement contre la pièce 1, en maintenant le capteur 2 sous pression contre la pièce 1. On peut également utiliser un dispositif de serrage purement mécanique permettant de faire varier la pression Pc exercée sur le capteur 2.

A titre d'exemple on a représenté sur la figure 6 diverses courbes obtenues à la suite d'essais effectués avec surfaces résidues rugueuses au moyen de toiles corindon (courbe A) et de papiers de verre (courbe B), sous l'effet d'une pression constante Pc égale à 2230Pa. La déformation de compression est portée en ordonnée, en micromètres, tandis que la rugosité totale Rt, en micromètres, telle que déterminée avec un rugosimètre à palpeur mécanique, est portée en abscisse. Cette rugosité totale Rt caractérise l'écart total de la rugosité tel que défini par la norme NF E 05-015. On voit d'après ce diagramme que, dans le cas du papier de verre (courbe B), la variation de la déformation superficielle est pratiquement proportionnelle à la rugosité alors que dans le cas d'une toile corindon (courbe A) la courbe de variation est proche d'une droite.

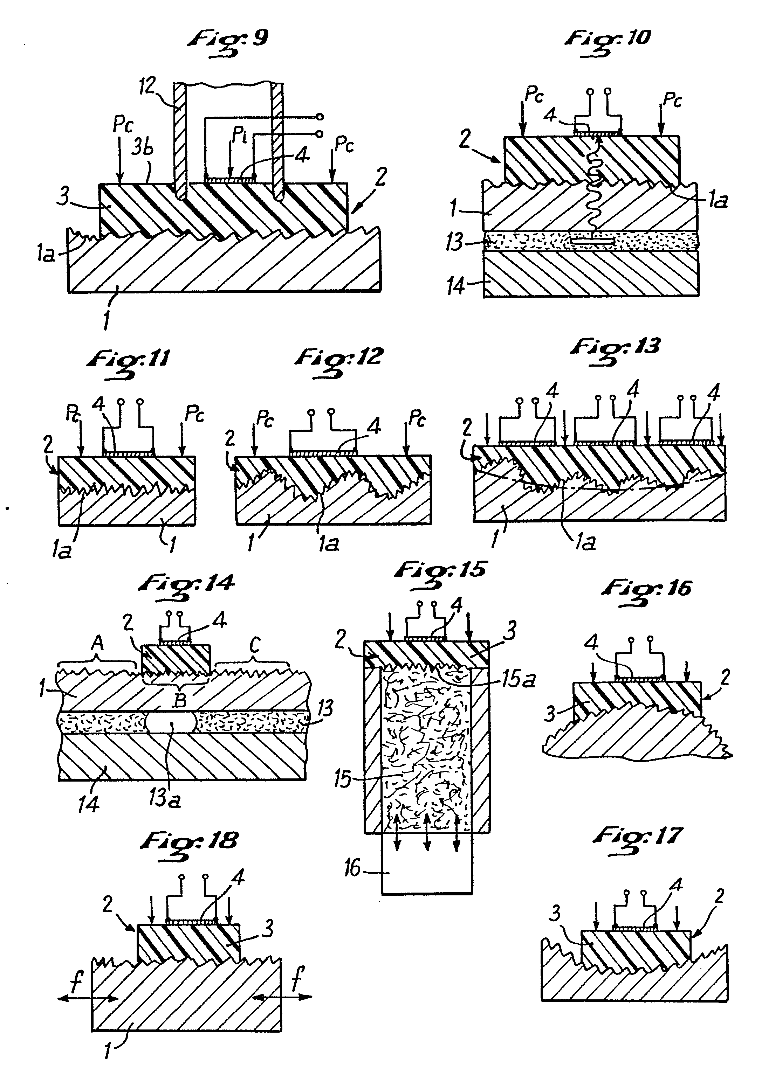

La figure 7 illustre une variante de mise en oeuvre du procédé suivant l'invention dans laquelle, pendant l'opération de mesure, on applique simultanément à l'élément déformable 3, toujours soumis à la pression constante prédéterminée Pc en direction de la pièce 1, une force de traction transversale Pd, c'est-à-dire parallèle aux surfaces 1a et 3a. La déformation superficielle b, dans le plan de la surface 3b, qui est engendrée par suite de l'application simultanée de la pression Pc et de la force Pd, peut être mesurée et comparée à la déformation élastique limite de la surface 3b avant que toute la surface 3a soit déplacée transversalement, dans le plan de la force Pd, par rapport à la surface rugueuse 1a de la pièce 1 et jusqu'à ce que l'élément 3 soit totalement déplacé à l'instant "du démarrage", c'est-à-dire au moment où l'intensité de la force Pd a atteint une valeur suffisante pour provoquer le déplacement latéral de l'ensemble du capteur volumique 2. La la déformation superficielle au démarrage d de la surface 3b de l'élément 3 caractérise avec précision la force de frottement pour une rugosité donnée de la surface 1a de la pièce 1. La valeur de cette déformation superficielle au démarrage d varie en fonction de la rugosité totale Rt comme il est indiqué schématiquement par le diagramme de la figure 8 relatif à une surface rugueuse obtenue par des toiles corindon : on voit d'après ce diagramme que cette déformation superficielle au démarrage d croit proportionnellement à la rugosité totale Rt.

Le capteur volumétrique de rugosité 2 suivant l'invention peut être utilisé pour la mesure de grandeurs physiques influant sur la rugosité de la surface d'une pièce quelconque ou encore d'une action perturbatrice s'exerçant sur l'élément déformable 3 du capteur.

La figure 9 illustre un utilisation du capteur de rugosité 2 à la mesure d'une pression variable Pi, exercée par un fluide ou un élément solide. Cette pression variable Pi est appliquée à l'intérieur d'une chambre ou d'un tube 12 appliqué contre la surface 3b de l'élément déformable 3, et la jauge d'extensométrie 4 qui est placée sur la surface 3b de l'élément déformable 3 est située à l'intérieur de tube 12.

La figure 10 illustre l'application du capteur volumétrique 2 au contrôle non destructif d'un joint adhésif 13 interposé entre la pièce 1 sur la surface rugueuse 1a de laquelle est appliqué le capteur 2, et une autre pièce plane 14. L'apparition d'une microfissure 15 dans le joint adhésif 13, y compris au niveau des fissures de plasticité, engendre une déformation superficielle de la surface rugueuse 1a qui est détectée par la jauge d'extensométrie 4. La sensibilité de la mesure, qui est de l'ordre de 1 m.m $^{-1}$. On peut observer ainsi un champ des déformations étendu ou au contraire très petit.

L'utilisation de plusieurs jauges extensométriques 4, sur la surface 3b de l'élément déformable 3, permet de trouver le sens préfentiel de la déformation et par conséquent de déterminer l'homogénéité et l'isotropie de la surface.

Si on soumet les pièces 1,14, assemblées par le joint adhésif 13, a un essai de fatigue ondulée, à 30Hz par exemple, la rugosité de la surface 1a évolue dans le temps et on peut mesurer, au moyen du capteur 2, la variation de rugosité et donc le changement d'état ou l'évolution du matériau pratiquement ponctuellement, c'est-à-dire dans une zone peu étendue. On peut aussi déterminer le cycle d'hystérésis de plasticité ou de viscosité sur quelques cycles et l'évolution de ce cycle d'hystéresis en fonction du nombre de cycles, et cela pour une zone peu étendue.

Les figures 11,12 et 13 montrent comment le capteur de rugosité 2 suivant l'invention peut être sensible à la fois aux variations de rugosité (figure 11), d'ondulation (figure 12) et de forme (figure 13). L'étendue du capteur dépend du type d'observation, c'est-à-dire qu'il privilégie l'influence des aspérités d'une échelle définie. Sur la figure 11 le capteur 2, d'étendue relativement réduite, est utilisé pour mesurer la rugosité de la surface 1a qui va de 0,2 micromètre à 10 micromètres. Sur la figure 12 le capteur 2 a une plus grande étendue et il mesure une ondulation qui s'étend sur une distance de 20 micromètres à 100 micromètres. Sur la figure 13 le capteur est utilisé pour mesure une forme et là il n'y a pas de limite : dans ce cas on utilise plusieurs jauges extensométriques 4 réparties à la suite les unes des autres sur un élément déformable 3 de grande étendue.

Le capture de rugosité 2 permet également de surveiller et de mesurer l'évolution des contraintes résiduelles dans la pièce 1, à partir de l'évolution de la rugosité de sa surface 1a. Par exemple en fatigue la vibration du pic de contrainte engendre une relaxation de la couche superficielle qui entraîne une variation de la rugosité de la surface 1a.

On peut également contrôler très rapidement, avec le capteur de rugosité, l'effet d'un traitement de surface par rapport à un autre. En effet chaque traitement de surface confère à la surface une rugosité différente. Par exemple un traitement de sablage donne à la surface une rugosité différente de celle obtenue avec un traitement sulfochromique. Le capteur de rugosité peut être également utilisé pour contrôler la différence de rugosité de la surface 1a de la pièce 1 respectivement avant et après un traitement thermique.

On peut également mesurer toute grandeur physique induisant une variation de la rugosité de la surface 1a: par exemple on peut mesurer, au moyen du capteur de rugosité 2, la variation de la température de la pièce 1 et/ou d'une pression à laquelle cette pièce est soumise, la variation de cette température et/ou de cette pression engendrant des déformation superficielles qui se traduisent par des variations de la rugosité. La capteur de rugosité 2 peut traduire en continu la variation de la température liée à la rugosité et par conséquent il donne en même temps la possibilité d'adapter la rugosité à une température donnée. Ceci est particulièrement intéressant pour définir la rugosité optimale, dans le cas d'un frottement par exemple.

On peut également mesurer à distance, au moyen du capteur de rugosité 2, une haute température à l'intérieur d'une enceinte, par l'intermédiaire de la paroi de cette enceinte dont la rugosité de la surface externe, sur laquelle est appliquée le capteur, varie en fonction de la température.

La figure 14 illustre l'application du capteur de rugosité 2 au contrôle des défauts d'un joint de colle 13 entre les deux pièces 1 et 14. L'absence de colle (bulle d'air) à l'endroit 13a dans le joint de colle 13 se traduit par une modification de la rugosité de la zone B de la surface 1a en regard de cette bulle d'air 13a à cause du comportement mécanique différent dans cette zone B du matériau de la pièce 1 et ceci à l'état de repos. Avant le collage les rugosités des zones A,B et C de la surface 1a sont identiques mais après collage la rugosité de la zone B qui se trouve située en regard de la bulle d'air 13a, est différente des rugosités des zones A et C, qui sont situées de part et d'autre de la zone B. On peut donc ainsi détecter très aisément le défaut du joint de colle 13.

La figure 15 illustre une application du capteur de rugosité 2 en tant que détecteur sensible à la succion. Le capteur 2 est appliqué contre la surface rugueuse 15a d'un corps poreux 15 en relation, d'une manière étanche vis-à-vis de l'extérieur avec un milieux humide 16 à teneur en humidité variable. De préférence la liaison entre le capteur de rugosité 2 et le corps poreux 15 est réalisée d'une manière étanche comme il représenté sur la figure 15. Le corps poreux 15 présente des canaux capillaires dont le diamètre est variable entre 0,1 micromètre et 2500 micromètres. Le capteur de rugosité 2 mesure, à partir de la variation de la rugosité de la surface 15a du corps poreux 15 avec laquelle il est en contact, une force de succion de compression si le corps poreux 15 pompe de l'humidité et au contraire une forme de succion de traction si ce corps poreux se dessèche.

Le capteur de rugosité 2 peut être également utilisé en tant qu'appareil de surveillance d'une zone sensible qui se dégrade soit par fatigue, soit par agression chimique ou pour tout autre raison. Le capteur 2, placé sur la surface rugueuse 1a de la pièce 1, peut surveiller toute dégradation de cette pièce 1, c'est-à-dire une modification des tensions internes dans cette pièce, sous l'effet d'une pression, d'une température, du vieillissement, d'une contrainte mécanique, physique ou chimique s'exerçant sur la face opposée à celle 1a sur laquelle est appliqué le capteur 2 et se traduisant par une variation de la rugosité de la surface 1a. Dans cette application le capteur 2 permet de contrôler en continu la dégradation de la pièce 1 par enregistrement des déformations superficielles par rapport à une valeur de référence.

Les figures 16 et 17 montrent que le capteur de rugosité 2 peut s'adapter à une forme quelconque de la surface d'une pièce concave (figure 16), convexe (figure 17) angulaire ou autre, et ceci grâce à la possibilité de mouler l'élément déformable 3, en caoutchouc, avec une forme quelconque correspondant à celle de la pièce sur laquelle il doit être appliqué.

La figure 18 illustre l'application du capteur de rugosité 2 suivant l'invention au contrôle de l'évolution des propriétés d'un matériau en fonction de la vitesse de sollicitation. La pièce 1 est représentée comme étant soumise à une force f variant périodiquement dans son plan, c'est-à-dire parallélement au plan de la surface rugueuse 1a sur laquelle est appliqué le capteur 2. Ce capteur permet de contrôler, dans ce cas, la variation de la rugosité, ce qui n'est par possible avec un rugosimètre classique à palpeur mécanique.

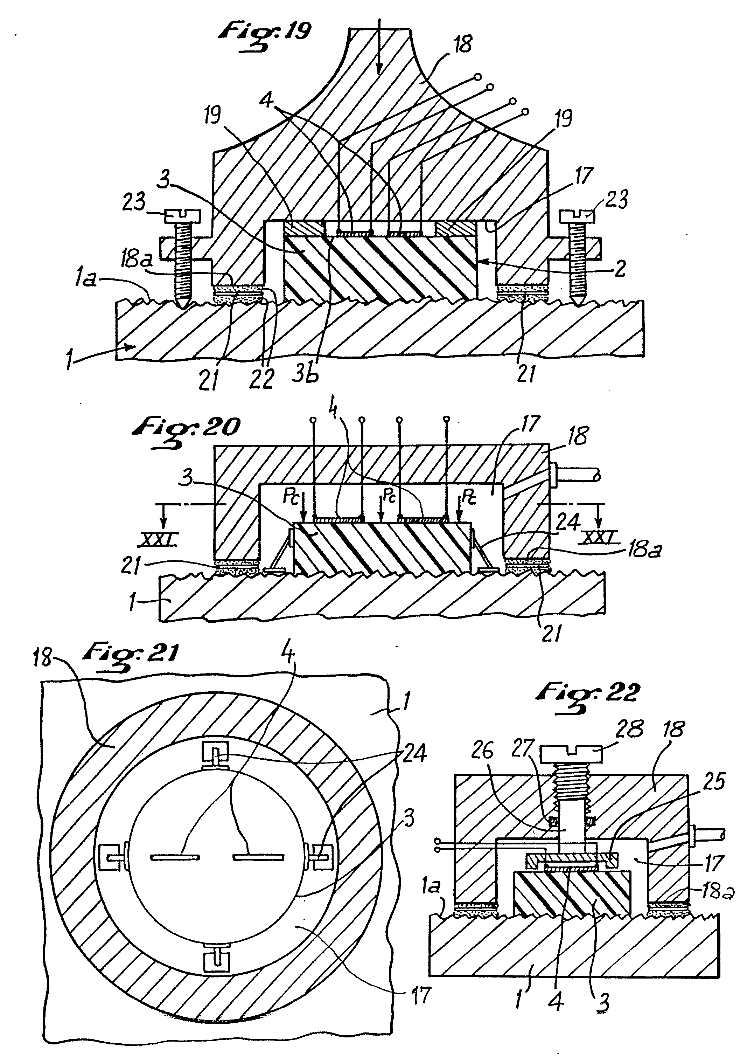

La figure 19 représente une forme d'exécution pratique d'un appareil suivant l'invention.Le capteur de rugosité 2 est logé dans un évidement 17 ménagé dans la face frontale d'appui 18a d'un support 18 qui est appliqué sous pression contre la surface rugueuse 1a de la pièce 1. Des entretoises rigides 19 sont interposées entre la surface supérieure 3b de l'élément déformable 3, qui porte la ou les jauges extensométriques 4, et le fond de l'évidement 17. La face frontale 18a du support 18 est appliquée contre la surface rugueuse 1a par l'intermédiaire de tampons déformables élastiques 21 qui adhèrent, au moyen de morceaux d'adhésif double face, d'une part à la face frontale 18a du support 18 et d'autre part à la surfae rugueuse 1a. Par ailleurs le support 18 porte sur sa surface externe des vis réglables 23 qui s'étendent parallèlement à la direction d'application de l'effort F engendrant la pression Pc et qui permettent d'ajuster le taux de compression de l'élément déformable 3 du capteur 2 et par conséquent la pression Pc

exercée par cet élément sur la surface rugueuse 1a.

Suivant une variante les entretoises 19 qui sont interposées entre la surface superieure 3b de l'élément déformable 3 et le fond de l'évidement 17, peuvent être constituées par un système de rouleaux ou de butée à billes de manière à assurer un degré de glissement plan à l'endroit des interfaces entre l'élément 3 et chaque entretoise 19 d'une part et entre le fond de l'évidement 17 du support 18 et chaque entretoise 19 d'autre part.

Suivant une autre variante on peut utiliser, pour appliquer le support 18 sous pression contre la surface rugueuse 1a de la pièce 1, un vide créé à l'intérieur de l'évidement 17 dans lequel est logé l'élément déformable 3.

Suivant une autre variante, ainsi qu'il est représenté sur les figures 20 et 21, on peut introduire dans l'évidement 17 un fluide à la pression Pc, tel que de l'air comprimé, qui plaque l'élément déformable 3 contre la surface rugueuse 1a sous la pression Pc. Une liaison étanche périphérique est assurée entre la face frontale d'appui 18a du support 18 et la surface rugueuse 1a, au moyen des tampons adhésifs 21. Par ailleurs l'élément déformable 3 est maintenu au contact de la surfae rugueuse 1a au moyen d'éléments de liaison souples 24 qui sont répartis autour de l'élément 3 et qui s'étendent entre la surface latérale de cet élément 3 et la surface rugueuse 1a. Ces éléments de liaison souples 24 assurent le maintien en place de l'élément déformable 3 sur la surface rugueuse 1a lorsque le volume de l'évidement 17 n'est pas soumis à la pression Pc.

La figure 22 illustre une variante d'exécution de l'appareil représenté sur la figure 20 dans laquelle l'élément déformable 3, logé dans l'évidement 17 du support 18, peut être maintenu en contact avec la surface rugueuse 1a au moyen d'une plaque d'appui 25 située entre la surface 3b de l'élément 3 et le fond de l'évidement 17. Cette plaque d'appui 25 est creuse dans la partie centrale de sa face qui est en contact avec la surface 3b de l'élément déformable 3, pour permettre le logement de la jauge de contrainte 4. Cette face frontale est appliquée sur la surface 3b avec interposition d'un adhésif faible non permanent, par exemple. La plaque d'appui 25 est fixée à l'extrémité inférieure de la tige d'une vis 26 qui est vissée dans un trou taraudé vertical percé dans le support 18, avec interposition d'un joint d'étanchéité 27, et dont la tête 28 est située au-dessus du support 18. L'appareil représenté sur la figure 22 permet de maintenir en position l'élément déformable 23 au moyen de la plaque d'appui 25, lorsqu'aucune presson ne règne à l'intérieur de l'évidement 17. Pour la mesure on applique la pression Pc à l'intérieur de l'évidement 17 et on dégage ensuite la plaque d'appui 25 vers le haut, en faisant tourner la vis 26 dans le sens approprié. Une fois la mesure effectuée, on peut remettre en place la plaque d'appui 25 afin de maintenir l'élément déformable 3 au contact de la surface rugueuse 1a.

D'après la description qui précède on voit que l'un des avantages offerts par le capteur volumique de rugosité 2 suivant l'invention est qu'il est intégralement récupérable après chaque mesure de rugosité, du fait que l'élément déformable 3 reprend instantanément, par suite de son élasticité, son état de repos initial.

Bien que, dans la description qui précède, l'appareil de mesure ne comporte qu'une seule jauge d'extensométrie 4, il va de soi qu'il pourrait également en comporter plusieurs s'étendant, par exemple, suivant deux directions perpendiculaires ou encore radialement suivant six directions à 60° les unes des autres etc..

## Revendications

1.- Procédé de mesure de la rugosité d'une surface d'une pièce dans lequel on applique, sur la surface rugueuse (1a) de la pièce (1), une première surface (3a) d'un élément plan déformable (3) et on exerce, sur une seconde surface (3b) de l'élément plan déformable (3), parallèle et opposée à la première surface (3a), une pression constante (Pc), en directon de la pièce (1), de manière que la première surface (3a) de l'élément déformable (3) épouse étroitement le profil de la surface rugueuse (1a) en pénétrant entre les aspérités de cette surface rugueuse, caractérisé en ce que l'élément plan déformable (3) est réalisé en un matériau ayant un grand degré de déformabilité élastique réversible de manière que la première surface (3a) de l'élément pénètre élastiquement et réversiblement entre les aspérités de la surface rugueuse et on mesure in situ, c'est-à-dire pendant que l'élément plan déformable est pressé contre la surface rugueuse, la déformation (contraction ou dilatation de Poisson) ou le déplacement résultant de la seconde surface (3b) de l'élément déformable (3).

2.- Procédé suivant la revendication 1 caractérisé en ce qu'on exerce en outre sur l'élément déformable (3), pendant la mesure, un effort (Pd) d'intensité variable, parallèlement au plan de la surface rugueuse (1a).

3.- Appareil de mesure de la rugosité d'une surface d'une pièce comprenant un élément déformable (3) d'épaisseur constante, ayant deux surfaces principales à savoir une première surface (3a) destinée à être appliquée sur la surface (1a) dont le rugosité doit être mesurée, et une seconde surface (3b) et des moyens pour appliquer , sous une pression prédéterminée (Pc), l'élément déformable (3) sur la surface rugueuse (1a), caractérisé en ce que l'élément déformable est réalisé en un matériau ayant un grand degré de déformabilité élastique réversible et il porte sur sa seconde surface (3b), c'est-à-dire celle qui est opposée à la première surface (3a) appliquée sur la surface rugueuse (1a), au moins une jauge de déformation (4) reliée à un appareil de mesure.

4.- Appareil suivant la revendication 3 caractérisé en ce que chaque jauge d'extensométrie est collée sur la seconde surface (3b) de l'élément déformable.

5.- Appareil suivant la revendication 3 caractérisé en ce que la jauge d'extensométrie (4) est fixée à la seconde surface (3b) de l'élément déformable (3) au moyen d'un adhésif auto-collant biface (9).

6.- Appareil suivant l'une quelconque des revendications 3 à 5 caractérisé en ce qu'un adhésif auto-collant (11) est appliqué sur la première surface (3a), pour assurer la liaison de l'élément déformable (3) avec la pièce (1).

7.- Appareil suivant l'une quelconque des revendications 3 à 6 caractérisé en ce que par dessus la jauge d'extensométrie (4) s'étend une couche de résine de protection (7) et par dessus cette couche est disposé un morceau de ruban adhésif (8).

8.- Appareil suivant l'une quelconque des revendications 3 à 7 caractérisé en ce qu'il comprend un support (18) appliqué, par sa face frontale (18a), contre la surface (1a) dont la rugosité doit être mesurée, l'élément déformable (3) est logé dans un évidement (17) ménagé dans la face frontale d'appui (18a) du support (18), la face frontale (18a) du support (18) est appliquée contre la surface rugueuse (1a) par l'intermédiaire de tampons déformables élastiques (21) qui adhèrent, au moyen de morceaux d'adhésif double face, d'une part à la face frontale (18a) du support (18) et d'autre part à la surface rugueuse (1a), et des moyens sont prévus pour appliquer l'élément déformable (3) logé dans l'évidement (17), contre la surface rugueuse (1a), sous la pression (Pc).

9.- Appareil suivant la revendication 8 caractérisé en ce que des entretoises (19), constituées par des éléments rigides fixes ou mobiles, sont interposées entre la seconde surface (3b) de l'élément déformable (3) qui porte la ou les jauges extensométriques (4), et le fond de l'évidement (17) et le support (18) porte, sur sa surface externe, des vis réglables (23) qui s'étendent parallèlement à la direction d'application, au support (18), d'un effort (F) engendrant la pression (Pc) et qui permettent d'ajuster le taux de compression de l'élément déformable (3) et par conséquent la pression (Pc) exercée par cet élément sur la surface rugueuse (1a).

10.- Appareil suivant la revendication 8 caractérisé en ce que des moyens sont prévus pour créer un vide ou pour introduire un fluide sous pression dans l'évidement (17) afin d'exercer la pression (Pc) sur l'élément déformable (3) plaqué contre la surface rugueuse (1a).

11.- Appareil suivant la revendication 10 caractérisé en ce que des éléments de maintien souple (24) sont répartis autour de l'élément déformable (3) et s'étendent entre la surface rugueuse (1a) et la surface latérale de l'élément déformable (3), afin de maintenir celui-ci en position lorsqu'aucune pression n'est présente dans l'évidement (17).

12.- Appareil suivant la revendication 10 caractérisé en ce qu'il comprend, à l'intérieur de l'évidement (17), entre l'élément déformable (3) et le fond de l'évidement (17), une plaque d'appui (25), creusée, dans sa partie centrale, d'un logement destiné à recevoir la jauge d'extensométrie (4), et qui est solidaire de l'extrémité d'une vis (25) vissée dans un trou taraudé du support (18) de manière à pouvoir maintenir l'élément déformable (3) contre la surface rugueuse (1a), lorsqu'aucune pression ne règne dans l'évidement (17) au moyen de la plaque d'appui (25) pressée contre la seconde surface (3b) de l'élément déformable (3).

Fig. 1

Fig. 2

Fig. 3

Fig. 4

Fig. 5

Fig. 7

Fig. 6

Fig. 8

Fig. 9

Fig. 10

Fig. 11

Fig. 12

Fig. 13

Fig. 14

Fig. 15

Fig. 16

Fig. 18

Fig. 17

Fig. 19

Fig. 20

Fig. 21

Fig. 22

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A,D | FR-A-1 583 511 (M. MEICHLER)<br>--- | | G 01 B 5/28<br>G 01 B 7/34 |
| A | DE-C- 900 278 (J. PERTHEN)<br>* page 1, lignes 11-17; page 2, lignes 38-93; figures 3-5 *<br>----- | 1,3,8, 10 | |

**DOMAINES TECHNIQUES RECHERCHES (Int. Cl.4)**

G 01 B 5/28
G 01 B 7/34

**Le présent rapport a été établi pour toutes les revendications**

| Lieu de la recherche | Date d'achèvement de la recherche | Examinateur |
|---|---|---|
| BERLIN | 18-05-1989 | KOEHN G |

EPO FORM 1503 03.82 (P0402)